Europäisches Patentamt

European Patent Office

Office européen des brevets

(11) Publication number: **0 303 832**
**A1**

(19)

## EUROPEAN PATENT APPLICATION
(12)

(21) Application number: 88111553.9

(51) Int. Cl.⁴ **B01D 53/34 , G01N 33/00**

(22) Date of filing: **18.07.88**

(30) Priority: 31.07.87 GB 8718223

(43) Date of publication of application:
**22.02.89 Bulletin 89/08**

(84) Designated Contracting States:
**BE DE FR NL**

(71) Applicant: **STORDY COMBUSTION
ENGINEERING LIMITED**
**Heath Mill Road Wombourne
Wolverhampton West Midlands. WV5
8BD(GB)**

(72) Inventor: **Wills, Brian**
**"Sandbourne" Stone Lane
Kinver West Midlands(GB)**
Inventor: **Johns, Gary**
**17 Butts Road Penn
Wolverhampton West Midlands(GB)**

(74) Representative: **Lewis, Samuel Hewitt et al**
**FORRESTER & BOEHMERT
Widenmayerstrasse 4/I
D-8000 München 22(DE)**

(54) **Method and apparatus for reducing the concentration of oxides of nitrogen.**

(57) Ammonia is introduced into hot products of combustion leaving a furnace chamber, to reduce the concentration of oxides of nitrogen. A minor proportion of the reacted gas flow is directed to a condenser (24) and the pH of the condensate is measured. The rate of addition of ammonia is controlled according to the measured pH to maintain a small excess of ammonia.

EP 0 303 832 A1

## "Method and apparatus for reducing the concentration of oxides of nitrogen"

The present invention relates to the treatment of products of combustion to reduce the concentration of oxides of nitrogen in those products. before the products of combustion are discharged to the atmosphere. When a fuel is burned in air, small quantities of oxides of nitrogen are formed. Generally, the higher the temperature attained during combustion, the larger the proportion of oxides of nitrogen present in the products of combustion. Methods to improve the efficiency of combustion processes usually involve attainment of a higher temperature. For example, the efficiency of combustion can be improved by use of a regenerator which extracts heat from the products of combustion and is then used to heat the combustion air. This reduces the proportion of the available heat which is carried away by the products of combustion and returns to the combustion chamber a proportion of the heat carried out of the combustion chamber by the products of combustion. Use of a regenerator generally increases significantly the temperature attained in the combustion chamber.

According to a first aspect of the present invention, there is provided a method of reducing the concentration of oxides of nitrogen in a gas stream wherein there is added to the gas stream a reactant which reacts with the oxides of nitrogen, at least a proportion of the reacted gas stream is condensed to or dissolved in a liquid, a parameter of the liquid is measured electrically and the rate of addition of the reactant is varied in a manner dependant on the measured parameter.

The measured parameter is preferably the concentration of hydrogen ions in the liquid. Devices for measuring this parameter are commonly available at moderate cost.

The reactant is preferably a reducing agent for the oxides of nitrogen, may be a base and may contain nitrogen.

The reactant is preferably added to the hot products of combustion after combustion has substantially ceased and whilst the temperature of the gas stream is excess of 800° C.

The reactant may be diluted, prior to mixing with the gas stream.

Preferably, only a minor proportion of the reacted gas stream is condensed to a liquid and the liquid flows continuously away from the position where the parameter is measured.

According to a second aspect of the invention, there is provided a furnace having a burner for mixing a fuel and air so that a burning mixture of fuel and air is directed into a heating chamber of the furnace, means defining an exhaust duct through which hot products of combustion are exhausted from the furnace chamber when the burner is firing, feed means for feeding a fluid reducing agent into the exhaust duct to mix with the products of combustion, and control means for controlling the rate of feeding or reducing the agent into the exhaust duct in a manner dependant on the concentration of the reducing agent in the products of combustion downstream of the feed means.

The control means may comprise, a condenser, means for directing to the condenser a minor proportion of the gases flowing along the exhaust duct and means for measuring the concentration of hydrogen ions in liquid leaving the condenser and providing an output signal representing that concentration, the output signal being used to control the rate of feeding of the reducing agent.

There is provided in accordance with a third aspect of the invention a burner for association with a furnace, the burner defining ducts for conveying air and fuel towards a heating chamber of the furnace and for conveying hot products of combustion from the heating chamber, wherein the burner has a condenser, means for directing a minor proportion of the products of combustion to the condenser, means for measuring the concentration of hydrogen ions in liquid leaving the condenser and providing an output signal representing that concentration, means for introducing a fluid reducing agent into the flow of products of combustion from the furnace chamber and means for controlling the rate of feeding of reducing agent in a manner dependant on the output signal.

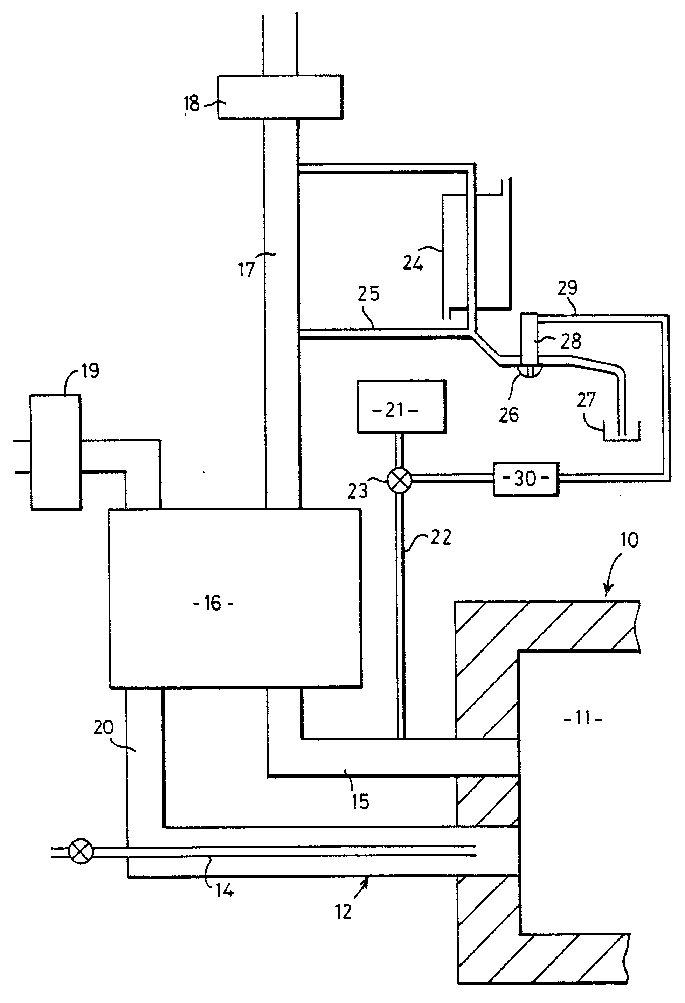

An example of a furnace in accordance with the second aspect of the invention will now be described, with reference to the accompanying drawing, which shows diagrammatically a furnace in which the products of combustion are treated by a method in accordance with the invention.

The furnace comprises a wall 10 defining a heating chamber 11 in which workpieces may be heated. There is releasably mounted on wall 10, in communication with an opening defined by that wall, a burner 12 for conveying combustion air and a fluid fuel along respective ducts to a mixing position where the fuel and air mix. The mixture burns and flows from the burner 12 into the chamber 11. Hot products of combustion leave chamber 11 along an exhaust duct 15. The exhaust duct may be separate from the burner 12 or incorporated in the burner. Alternatively, the exhaust duct may be provided by a further burner which is identical with the burner 12, and burners alternately operating in fire and flue modes.

The furnace further comprises a heat store 16 to which the exhaust duct 15 leads from the chamber 11 and which is adapted to extract heat from hot products of combustion. The cool products of combustion leave the heat store along a flue 17 which may lead to a stack from which the products of combustion are discharged to the atmosphere. In the flue, there may be provided an exhaust fan 18.

A fan 19 or other means for supplying combustion air also communicates with the heat store 16 and an air duct 20 is provided for conveying combustion air from the heat store to the burner 12. The heat store may be a regenerator defining alternative flowpaths and provided with means for directing products of combustion along a first flowpath whilst combustion air is directed along a second flowpath and subsequently directing hot products of combustion along the second flowpath whilst air is directed along the first flowpath. The combustion air receives heat from the heat store and carries that heat back to the heating chamber 11.

The general construction and arrangement of the wall 10, burner 12, heat store 16 and the ducts connecting same with one another and with the fans 18 and 19 may be the same as those of known furnaces. For example, a tube may extend through the heating chamber 11 from the burner 12 to the port through which products of combustion are exhausted from the chamber, so that burning fuel and products of combustion are not permitted to contact workpieces in the heating chamber.

Feed means is provided for feeding into the hot products of combustion flowing along the exhaust duct 15 a reducing agent. The feed means comprises a bulk supply 21 of the reducing agent, a pipe 22 leading from the bulk supply into the duct 15 and a valve 23 for controlling the flow of reducing agent along the pipe. The bulk supply may be liquid ammonia or an aqueous solution of ammonia.

The furnace further comprises a condenser 24 which may be a water-cooled condenser. A pipe 25 connects an inlet to the condenser 24 with the flowpath for the products of combustion at a position downstream of the position where the feed pipe 22 communicates with the exhaust duct 15. The pipe 25 may communicate with the flowpath for the products of combustion downstream of the exhaust fan 18, between the exhaust fan and the heat store 16, or upstream of the heat store. Means is provided for directing a minor proportion of the flow of products of combustion along the pipe 25 to the condenser. This means may be in the form of deflector in the flowpath or may comprise known means for drawing gases along the pipe 25.

An outlet from the condenser 24 communicates with a small well 26 through which liquid formed in the condenser flows to a discharge point 27. The probe 28 of a known pH meter is arranged so that electrodes of the probe dip into the pool of liquid in the well 26. The electrical output signal from the pH meter is conducted along 29 to control means 30 for controlling operation of the valve 23.

During operation of the furnace, oxides of nitrogen are produced in the burner 12 and/or the heating chamber 11. The products of combustion leave the heating chamber at a temperature which is generally in excess of $800^\circ$ C and more typically in excess of $1,000^\circ$ C. Ammonia is introduced into the products of combustion at this temperature and reacts with oxides of nitrogen present in the gas stream, the concentration of oxides of nitrogen can be reduced to an acceptable level before the products of combustion are discharged to the atmosphere.

A minor proportion of the reacted gas stream is diverted to the condenser 24 where the water vapour content of the gas stream is condensed and excess ammonia present in the gas stream is dissolved in the water, which flows into the well 26. The pH of the water flowing through the well is measured and the measurement of pH is used to control the rate of addition of ammonia so that, after reaction with oxides of nitrogen, there remains a small excess of ammonia. This excess is of sufficient magnitude to be measurable by a known pH meter but is preferably no greater than is required to enable the presence of excess ammonia to be detected by the pH meter. Typically, the concentration of ammonia in the gases discharged to the atmosphere is no greater than fifty parts per million.

The rate of flow of liquid from the condenser 24 is preferably equivalent to the flow in a period which is within the range one half to five minutes of the volume of liquid contained by the well 26.

The apparatus illustrated in the accompanying drawing may be modified by substitution for the condenser 24, pipe 25, well 26 and probe 28 of a known device which has a liquid film separated from the gas stream flowing through the flue 17 by a membrane which is permeable to ammonia and which includes known means for measuring the concentration of hydrogen ions in the liquid film. During use, ammonia would diffuse from the exhaust gas stream through the membrane into the liquid film and the concentration of ammonia in the liquid film would be representative of the concentration of ammonia in the products of combustion after reaction of the added ammonia with oxides of nitrogen. The output signal from the device would be used in the same manner as is the output signal from the probe 28 for controlling the rate of addition of ammonia.

The features disclosed in the foregoing description, or the accompanying drawings, expressed in their specific forms or in terms of a means for performing the disclosed function, or a method or process for attaining the disclosed result. as appropriate, may. separately or any combination of such features. be utilised for realising the invention in diverse forms thereof.

## Claims

1. A method of reducing the concentration of oxides of nitrogen in a gas stream wherein there is added to the gas stream a reactant which reacts with the oxides of nitrogen. at least a proportion of the reacted gas stream is condensed to or is dissolved in a liquid. a parameter of the liquid is measured electrically and the rate of addition of the reactant is varied in a manner dependant on the measured parameter.

2. A method according to Claim 1 wherein the parameter is the concentration of hydrogen ions.

3. A method according to Claim 1 or Claim 2 wherein the reactant is a base.

4. A method according to any preceding Claim wherein the reactant is added to the hot products of combustion after combustion has substantially ceased and whilst the temperature of the gas stream exceeds 800°C.

5. A method according to any preceding Claim wherein the reactant is diluted prior to being mixed with the products of combustion.

6. A method according to any preceding Claim wherein a minor proportion of the reacted gas stream is condensed to a liquid and the liquid flows continuously away from a position where the parameter is measured.

7. A method according to Claim 2 wherein, if the concentration of hydrogen ion falls, the rate of addition of reactant is lowered.

8. A furnace having a burner (12) for a mixing air and fuel and directing a burning mixture of air and fuel into a heating chamber (11) of the furnace, means (15,17) defining an exhaust duct through which hot products of combustion are exhausted from the heating chamber when the burner is firing, feed means (22) for feeding a fluid reducing agent into the exhaust duct to mix with the products of combustion and control means (23) for controlling the rate of feeding of reducing agent into the exhaust duct in a manner dependant on the concentration of reducing agent in the products of combustion downstream of the feed means.

9. A burner for association with a furnace. the burner defining ducts (20,14) for conveying air and fuel towards a heating chamber (11) of the furnace and for conveying hot products of combustion from the heating chamber, wherein the burner has means (22) for introducing a fluid reducing agent into the products of combustion which leave the heating chamber and control means (23) for controlling the rate of feeding of reducing agent into the products of combustion in a manner dependant upon the concentration of reducing agent in the products of combustion downstream of said means.

10. A furnace according to Claim 8 or a burner according to Claim 9 wherein the control means includes a condenser (24), means (25) for directing to the condenser a minor proportion of the products of combustion and means (23) for measuring the concentration of hydrogen ions in liquid leaving the condenser and providing an output signal representing that concentration.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| E | DE-A-3 704 030 (RUHRGAS AG) <br> * Whole document * <br> --- | 1,2,3,6,7 | B 01 D 53/34 <br> G 01 N 33/00 |
| X | DE-A-3 426 147 (J. KERN) <br> * Claims 1,3,5; page 4 * | 1-3,6,7 | |
| Y | | 4,5,8-10 | |
| Y | FR-A-2 290 243 (MITSUBISHI CHEMICAL INDUSTRIES LTD) <br> * Claims 1,3,6; page 5, lines 2-6 * <br> ----- | 4,5,8-10 | |

TECHNICAL FIELDS SEARCHED (Int. Cl.4)

B 01 D 53/00
G 01 N 33/00

The present search report has been drawn up for all claims

| Place of search | Date of completion of the search | Examiner |
|---|---|---|
| THE HAGUE | 18-11-1988 | POLESAK, H.F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................
& : member of the same patent family, corresponding document

EPO FORM 1503 03.82 (P0401)